**Europäisches Patentamt**

**European Patent Office**

**Office européen des brevets**

(19)

(11) Veröffentlichungsnummer: **0 240 997 B1**

(12) ## EUROPÄISCHE PATENTSCHRIFT

(45) Veröffentlichungstag der Patentschrift: **11.09.91**

(51) Int. Cl.⁵: **F24J 2/46**, F24J 2/26

(21) Anmeldenummer: **87105147.0**

(22) Anmeldetag: **07.04.87**

(54) **Vakuum-Sonnenkollektor.**

(30) Priorität: **08.04.86 DE 3611764**

(43) Veröffentlichungstag der Anmeldung:
**14.10.87 Patentblatt 87/42**

(45) Bekanntmachung des Hinweises auf die
Patenterteilung:
**11.09.91 Patentblatt 91/37**

(84) Benannte Vertragsstaaten:
**AT BE CH DE ES FR GB GR IT LI LU NL SE**

(56) Entgegenhaltungen:
**DE-A- 2 636 331**
**DE-A- 2 737 784**
**DE-A- 3 101 298**
**FR-A- 2 476 814**
**US-A- 4 063 544**

(73) Patentinhaber: **Kellner, Bernd**
**Ruckäckerweg 5**
**W-8400 Regensburg 25(DE)**

(72) Erfinder: **Kellner, Bernd**
**Ruckäckerweg 5**
**W-8400 Regensburg 25(DE)**

(74) Vertreter: **WILHELMS, KILIAN & PARTNER Patentanwälte**
**Eduard-Schmid-Strasse 2**
**W-8000 München 90(DE)**

Rank Xerox (UK) Business Services

## Beschreibung

Die Erfindung betrifft einen Vakuum-Sonnenkollektor gemäß Oberbegriff des Patentanspruchs 1.

Bei einem bekannten Sonnenkollektor dieser Art (DE-OS 31 01 298) ist der Boden der Kollektorwanne eben. Dies führt, obwohl die Wanne durch ihre nahtlose tiefgezogene Ausführung selbsttragend ist, beim Evakuieren des Sonnenkollektors immer noch zu Verformungen der Wanne, die so geartet sind, daß sie die Abdeckscheibe belasten und Verspannungen derselben hervorrufen können, welche zu einer Bruchgefahr für die Scheibe führen.

Aufgabe der Erfindung ist es, einen Sonnenkollektor der eingangs genannten Art auf möglichst einfache Weise so auszubilden, daß die beim Evakuieren des Sonnenkollektors auftretenden Formänderungen der Blechwanne nicht zu einer bruchträchtigen Verspannung der Abdeckscheibe führen.

Diese Aufgabe wird durch einen Sonnenkollektor gelöst, wie er in Patentanspruch 1 gekennzeichnet ist.

Aus der US-PS 4 186 723 ist es in einem anderen Zusammenhang, nämlich für einen Vakuum-Sonnenkollektor, bei welchem die Absorberplatine ausschließlich zwischen Glasabdeckungen eingeschlossen ist, bekannt, diese Abdeckungen innerhalb eines ebenen flanschartigen Randes mit aufeinanderfolgenden und ineinander übergehenden kuppelartigen Wölbungen zu versehen, um jedwede Formänderung der Abdeckungen zur Vermeidung ihres Bruches auszuschließen.

Durch die erfindungsgemäße Ausbildung des Bodens der Blechwanne wird hingegen eine Membranwirkung erzielt, welche verhindert, daß sich Verbiegungen und Verwindungen der Wanne über deren Wände in unzulässiger Weise auf die Abdeckscheibe übertragen können.

Eine derartige Wirkung wird noch verbessert, wenn sich die Wellen des Wannenbodens in den zur Wellenrichtung (gemeint ist die Richtung, in der Wellenberge und Wellentäler aufeinanderfolgen) parallelen Seitenwänden der Blechwanne fortsetzen.

Weitere vorteilhafte Weiterbildungen der Erfindung sind Gegenstand der abhängigen Ansprüche 2 bis 6.

Im folgenden wird eine bevorzugte Ausführungsform der Erfindung anhand der beigefügten Zeichnung beschrieben. Auf dieser zeigt

Fig. 1    eine abgebrochene perspektivische Explosionsansicht eines Vakuum-Sonnenkollektors,

Fig. 2    schematisch einen Schnitt an der Stelle einer Rohrdurchführung durch die Seitenwand des Kollektors, und

Fig. 3    eine schematische perspektivische Darstellung der Anordnung von mit Stützelementen versehenen Blechstreifen auf dem Wannenboden.

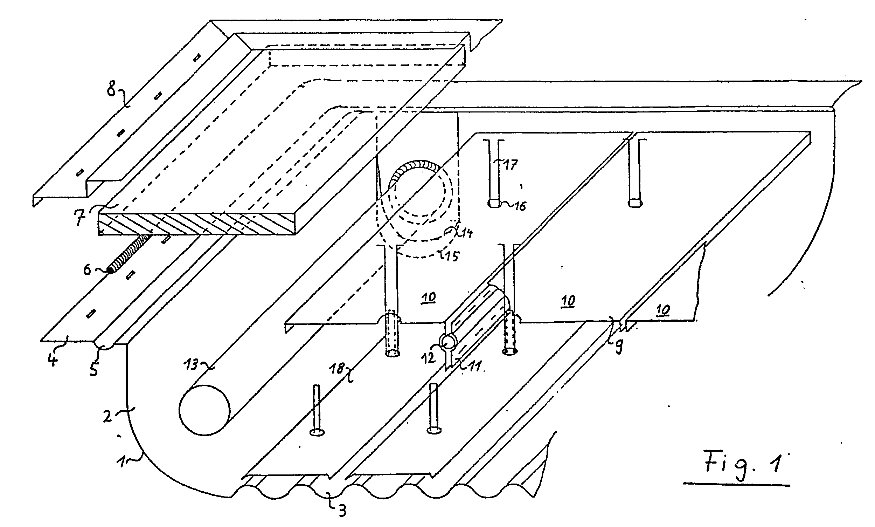

Figur 1 zeigt in perspektivischer Explosionsansicht einen Eckbereich eines Vakuum-Sonnenkollektors mit rechteckigem Grundriß. Dieser weist eine ausgehend von einem ebenen Blech tiefgezogene und damit einstückig-nahtlose kastenförmige Wanne 1 auf, die mit von außen gesehen konvexen Seitenwänden 2, einem wellblechartig gewellten Wannenboden 3 und einem zum Wannenboden parallelen ebenen flanschartigen Rand 4 ausgebildet ist, welcher eine umlaufende Nut 5 zur Aufnahme einer Dichtung 6 enthält. Mit wellblechartig gewellt ist gemeint, daß sich in allen zu den Wellenkämmen bzw. Wellentälern senkrechten Schnitten im wesentlichen der gleiche etwa sinusförmige Verlauf ergibt. Auf dem Rand 4 liegt über die Dichtung 6 eine strahlungsdurchlässige Abdeckscheibe 7 für die Wanne auf, welche durch einen ihren Rand übergreifenden und mit dem Wannenrand 4 verbundenen Rahmen 8 unter Zusammendrükken der Dichtung 6 gegen den Wannenrand 4 gedrückt wird.

In der Wanne unterhalb der Abdeckscheibe 7 befindet sich ein Strahlungsabsorber 9, welcher aus streifenförmigen Metallplatten 10 aufgebaut ist, die insgesamt im wesentlichen den gesamten Wannenquerschnitt überdecken. Dieie Absorberplatten sind paarweise über abgewinkelte Abschnitte 11 mit den einzelnen Zügen einer meanderförmig über den Querschnitt der Wanne hinweg angelegten Leitung 12 für das Wärmetransportmedium verbunden. Die Leitung 12 endet in zwei Sammelleitungen 13 (Zu- und Ablauf),die parallel zu Seitenwänden (vorzugsweise den kurzen Seitenwänden bei einem rechteckigen Kollektor) der Kollektorwanne verlaufen und von denen eine in Figur 1 dargestellt ist.

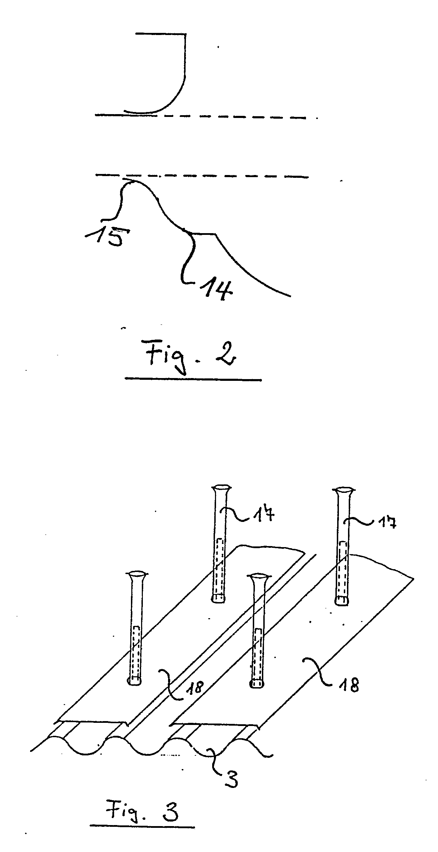

Die Herausführung der Sammelleitungen 13 aus der Wanne erfolgt durch in Figur 2 schematisch dargestellte Ausbuchtungen 14, die bei 15 angehalst sind und Durchtrittsöffnungen liefern, deren Ebene senkrecht zu den Sammelrohren 13 verläuft.

Die Absorberplatten 10 weisen Löcher 16 für den Durchtritt von Stützen 17 zur Abstützung der Abdeckscheibe 7 in regelmäßigen Abständen über ihre Fläche hinweg auf. Die Stützen 17 sind auf in Richtung der Wellenberge des Wannenbodens 3 angeordneten streifenförmigen Blechen 18 angebracht,die mit ihren Längsrändern leicht abgebogen sind und zwei benachbarte Wellenberge übergreifen. Die Anordnung der Stützen 17 auf den Blechen erfolgt dabei so, daß die Anbringungspunkte der Stützen über Wellentälern liegen. Auf diese Weise gewinnt man unter den Stützelementen einen Freiraum, der verhindert, daß der Wannenboden durch die infolge des Unterdrucks im Absorber durch die Abdeckscheibe 7 belasteten Stützen 17 markiert wird.

Figur 3 zeigt nochmals gesondert die Anordnung der an den Längsrändern abgekrümmten Blechstreifen 18 mit den Stützen 17 auf dem Wannenboden.

Für einen Sonnenkollektor mit einer Fläche von 1 × 2 Metern hat der in Längsrichtung des Kollektors liegende Abstand zweier aufeinanderfolgender Wellenberge typischerweise eine Größenordnung von 5 cm. Die Dicke des Blechs der Wanne beträgt dabei 1 - 2 mm.

Die konvexe Krümmung der Seitenwände 2 der Wanne 1 kann kontinuierlich oder aber auch in Form polygonartig aufeinanderfolgender ebener Abschnitte ausgebildet sein. In einer Abwandlung der dargestellten Ausführungsform können sich die Wellen des Wannenbodens mit Gewinn für die Formhaltigkeit der Wanne nach dem Tiefziehen in den zur Wellenrichtung (gemeint ist die Richtung, in der Wellenberge und -täler aufeinanderfolgen) parallelen Seitenwänden fortsetzen; dies sind die längeren Seitenwände des rechteckigen Kollektors. Die Wellen der langen Seitenwände können sich in den kurzen Seitenwänden fortsetzen. Die Seitenwände sind dann in Umfangsrichtung kontinuierlich gewellt. Dies trägt weiter zur Formhaltigkeit bei.

## Patentansprüche

1. Vakuum-Sonnenkollektor mit einer einstückig nahtlos tiefgezogenen Blechwanne (1), welche einen Absorber (9) und Leitungen (12, 13) für ein Wärmetransportmedium enthält und einen Rand (4) aufweist, auf welchem eine die Blechwanne abdeckende strahlungsdurchlässige Scheibe (7) aufliegt, die über ihre dem Wannenboden zugekehrte Fläche hinweg von in Abständen liegenden Stützelementen (17) abgestützt wird, die sich ihrerseits gegen den Wannenboden (3) abstützen, dadurch gekennzeichnet, daß der Wannenboden (3) wellblechartig gewellt ausgebildet ist und daß die Stützelemente (17) auf einem oder mehreren Blechen (18) angebracht sind, welche auf den Wellenbergen des Wannenbodens (3) aufliegen, wobei sich die Stützelemente (17) dabei über den Wellentälern befinden.

2. Sonnenkollektor nach Anspruch 1, dadurch gekennzeichnet, daß die Stützelemente (17) im Mittelbereich von Blechstreifen (18) aufgebracht sind, die mit ihren leicht abgebogenen Randbereichen zwei benachbarte Wellenberge übergreifen.

3. Sonnenkollektor nach einem der vorstehenden Ansprüche, dadurch gekennzeichnet, daß sich die Wellen in den zur Wellenrichtung parallelen Seitenwänden (2) der Blechwanne (1) fortsetzen.

4. Sonnenkollektor nach Anspruch 3, dadurch gekennzeichnet, daß die in den zur Wellenrichtung parallelen Seitenwänden (2) der Blechwanne (1) vorhandenen Wellen sich in den übrigen Seitenwänden (2) fortsetzen.

5. Sonnenkollektor nach einem der vorstehenden Ansprüche, dadurch gekennzeichnet, daß die Seitenwände (2) der Blechwanne (1) von außen gesehen konvex gekrümmt sind.

6. Sonnenkollektor nach Anspruch 5, wobei Leitungen (13) für das Wärmetransportmedium durch die Seitenwände austreten, dadurch gekennzeichnet, daß die Seitenwände (2) an den Durchtrittsstellen der Leitungen (13) für das Wärmtransportmedium Ausbuchtungen (14) aufweisen, derart, daß sich die Durchtrittsöffnungen für die Leitungen (13) in einer zur Kollektorebene senkrechten Ebene befinden.

## Claims

1. Vacuum solar collector comprising an integrally seam-less deep-drawn sheet metal trough (1) which contains an absorber (9) and conduits (12, 13) for a heat transport medium and has an edge (4) on which a radiation-permeable pane (7) rests which covers the sheet metal trough and which is supported over its face facing the trough bottom by support elements (17) which lie at intervals apart and which in turn bear against the trough bottom (3), characterized in that the trough bottom (3) is undulated in the form of a corrugated sheet, and that the support elements (17) are disposed on one or more sheet metals (18) which rest on the wave crests of the trough bottom (3), the support elements (17) being located over the wave troughs.

2. Solar collector according to claim 1, characterized in that the support elements (17) are disposed in the centre region of sheet metal strips (18) which with their slightly bent edge regions engage over two adjacent wave crests.

3. Solar collector according to anyone of the preceding claims, characterized in that the corrugations continue in the side walls (2) of the sheet metal trough (1) parallel to the wave direction.

4. Solar collector according to claim 3, characterized in that the corrugations present in the side walls (2) of the sheet metal trough (1) parallel to the wave direction continue in the other side walls (2).

5. Solar collector according to anyone of the preceding claims, characterized in that the side walls (2) of the sheet metal trough (1) are convexly curved seen from the outside.

6. Solar collector according to claim 5, conduits (13) for the heat transport medium emerging through the side walls, characterized in that the side walls (2) at the passage points of the conduits (13) for the heat transport medium comprise bulges (14) such that the passage openings for the tubes (13) are in a plane perpendicular to the collector plane.

**Revendications**

1. Collecteur solaire sous vide du type comprenant une cuvette en tôle emboutie, sans soudure et d'une pièce (1) qui contient un absorbeur (9) et des tuyauteries (12, 13) pour un agent caloporteur et comporte un rebord (4) sur lequel repose une vitre transparente au rayonnement (7) qui recouvre la cuvette en tôle et qui est soutenue, sur sa surface tournée vers le fond de la cuvette, par des éléments d'appui (17) disposés de place en place et qui s'appuient eux-même contre le fond de la cuvette, caractérisé en ce que le fond (3) de la cuvette est ondulé à la facon d'une tôle ondulée, et que les éléments d'appui (17) sont montés sur une ou plusieurs tôles (18) qui s'appuient sur les crêtes d'ondulation du fond de cuvette (3), ces éléments d'appui (17) se trouvant alors audessus des creux d'ondulation.

2. Collecteur solaire selon la revendication 1, caractérisé en ce que les éléments d'appui (17) sont montés dans la partie médiane des bandes de tôle (18) qui, par leurs zones marginales légèrement repliées, recouvrent deux crêtes d'ondulation voisines.

3. Collecteur solaire selon l'une quelconque des revendications précédentes, caractérisé en ce que les ondulations se poursuivent dans les parois latérales (2) de la cuvette en tôle (1) qui sont paralléles à la direction d'ondulation.

4. Collectuer solaire selon la revendication 3, caractérisé en ce que les ondulations présentes dans les parois latérales (2) de la cuvette en tôle (1) qui sont paralléles à la direction d'ondulation se poursuivent dans les autres parois latérales (2).

5. Collecteur solaire selon l'une quelconque des revendications précédentes, caractérisé en ce que les parois latérales (2) de la cuvette en tôle (1) présentent une courbure convexe lorsqu'on regarde de l'extérieur.

6. Collecteur solaire selon la revendication 5, dans lequel des tuyauteries d'agent caloporteur (13) sortent des parois latérales en les traversant, caractérisé en ce que les parois latérales (2) présentent, aux emplacements de traversée de ces tuyauteries d'agent caloporteur (13), des parties embouties (14) telles que les ouvertures de passage prévues pour les tuyauteries (13) se trouvent dans un plan perpendiculaire au plan du collecteur.

Fig. 1

EP 0 240 997 B1

Fig. 2

Fig. 3